# EUROPEAN PATENT SPECIFICATION

(11) **EP 2 613 483 B1**
(45) Date of publication and mention of the grant of the patent: **13.01.2016**
(21) Application number: 11821073.1
(22) Date of filing: 02.08.2011
(51) Int. Cl.: H04L 12/58, H04L 29/06, G06F 17/30, H04W 88/02, G06Q 10/10, H04M 1/2745, H04W 4/20, H04L 29/08, H04M 1/725

(54) **METHOD FOR OBTAINING INFORMATION PROVIDED BY CONTACTS VIA NETWORK AFTER INPUTTING CONTACT INFORMATION**
VERFAHREN ZUR GEWINNUNG VON INFORMATIONEN DURCH KONTAKTE ÜBER EIN NETZWERK NACH EINGABE VON KONTAKTINFORMATIONEN
PROCÉDÉ POUR OBTENIR DES INFORMATIONS FOURNIES PAR DES CONTACTS PAR L'INTERMÉDIAIRE D'UN RÉSEAU APRÈS ENTRÉE DES INFORMATIONS DE CONTACT

(30) Priority: 31.08.2010 CN 201010271280
(43) Date of publication of application: 10.07.2013
(73) Proprietor: Intsig Information Co., Ltd., Shanghai 200433 (CN)
(72) Inventor: ZHEN, Lixin, Shanghai 200433 (CN); LONG, Teng, Shanghai 200433 (CN); LUO, Xiping, Shanghai 200433 (CN)
(74) Representative: Carpintero Lopez, Francisco
(86) International application number: PCT/CN2011/077897
(87) International publication number: WO 2012/028047

(56) References cited:
- WO-A1-2010/018455
- WO-A2-2008/096265
- CN-A- 1 589 040
- CN-A- 101 009 735
- CN-A- 101 365 156
- CN-A- 101 945 057
- US-A1- 2006 271 391
- US-A1- 2007 266 099

## Description

### Background of the Present Invention

### Field of Invention

The present invention relates to the field of computer network technologies, particularly to an information providing method, and more particularly to a method for obtaining information provided by contacts via network after inputting contact information.

### Description of Related Arts

A business card is a medium frequently used by people and for recording and transferring contact details. In an everyday business activity, exchange of a large number of business card is usually involved. People transfer contact details by exchanging business cards, so as to establish contact with others.

The use of various social networking sites, such as, domestic QQ and kaixin as well as overseas facebook, twitter, and MSN, has become very popular in everyday life of the people. In order to use the social networking sites, a user is required to register first to become a registered user of the networks. Each registered user has a contact person list or a friends list. The user may directly perform various contact activities, including chatting, with a contact person in the contact person list. Each registered user may post a topic on a website, and upload a picture and various multimedia information including a video/audio, which may be browsed and viewed by other users. For multimedia information uploaded by a registered user, the registered user may stipulate, by setting, that the information can only be viewed by authorized users or can be viewed by all users.

A business card recognition technology currently widely applied in a mobile phone or a microcomputer uses principles of image processing and optical character recognition to perform automatic processing and recognition on a business card image obtained by a camera by photographing or obtained by a scanner by scanning, and then automatically extracts useful information therefrom, such as a name, a phone number, and an E-mail address, which are added to an address book, which makes it much more convenient for people to input contact information recorded on a business card into an electronic device. An example is business card recognition software pre-installed in a Dopod Touch Diamond mobile phone.

Due to limitation of size and material of a business card, the amount of information of a business card owner printed on the business card and the information recording means are limited. For example, a company manage cannot have a long introduction of company business thereof printed on a business card, which incurs strict limits to information borne and transferred by a business card. Document US2007/0266099 A1 discloses transmitting contact information comprising "profile datum" and "multimedia datum" in a first and a second format respectively.

### Summary of the Present Invention

The technical problem to be solved by the present invention is to provide a method for obtaining information provided by contacts via network after inputting contact information, so as to eliminate the limit that a business card can only transfer information through a limited quantity of text and through limited size of a picture, thereby increasing the quantity of information borne and transferred by the business card and add a manifestation of information.

In order to solve the technical problem, the present invention adopts the following technical solutions.

A method for obtaining information provided by contacts via network after inputting contact information includes the following steps.
Step A: A user A obtains contact information of a user B.
Step B: The user A inputs the contact information of the user B into an address book.
Step C: The user A sends a inquery request to a contact information server according to the contact information of the user B.
Step D: According to the contact information submitted by user A, the contact information server searches the information stored in the server to find out whether there is some information from user B related to the contact information; if yes, proceed to Step E; otherwise, proceed to Step F.
Step E: The contact information server returns the information stored by the user B on the website and associated with the contact information to the user A.
Step F: The contact information server returns that no information associated with the contact information can be provided.
Step G: End.

According to a preferred solution of the present invention, in Step B, the user A inputs the contact information of the user B into the address book through one of the following methods.

In a first method, the user A directly manually inputs the contact information of the user B.

In a second method, the user A obtains an image including the contact information of the user B by photographing or scanning, and uses character recognition software to automatically recognize and extract information in the image.

According to a preferred solution of the present invention, in Step D, the contact information server determines, according to the contact information submitted by the user A, whether the multimedia information stored by the user B on the server and associated with the contact information can be found. The contact information server is required to determine whether the user B is a registered user of the contact information server, whether the user B stores the information associated with the business card, and whether the user B allows other users, submitting a request, to obtain the information.

According to a preferred solution of the present invention, the method for the contact information server to perform inquery regarding the user B includes the following steps.
Step D1: Obtain information of a business card stored by a registered user of the contact information server.
Step D2: Match a name, a phone number, a mobile phone number, a fax number and E-mail information included in the textual information of the business card submitted by the user A with corresponding information in the business card information item by item, so as to obtain the number of items of information that is completely consistent, and the number of items of information that is different in only a few of characters.
Step D3: Determine whether the textual information of the business card submitted by the user A matches the business card information stored by the registered user; if yes, proceed to Step D4; otherwise, proceed to Step D7.
Step D4: Determine whether the user storing the business card stores multimedia information associated with the business card; if yes, proceed to Step D5; otherwise, proceed to Step D8.
Step D5: Determine whether the user storing the business card allows the user A, submitting the request, to obtain the information; if yes, proceed to Step D6; otherwise, proceed to Step D8.
Step D6: Return the found multimedia information stored by the business card owner on the website and associated with the business card, proceed to Step D9, and end.
Step D7: Determine whether business card information stored by all registered users of the website is checked; if yes, proceed to Step D8; otherwise, proceed to Step D1 to obtain and match business card information stored by a next registered user of the website.
Step D8: Return inquery failure, proceed to D9, and end.
Step D9: End.

According to a preferred solution of the present invention, in Step D2, the being different in only a few of characters refers to that the number of characters that incur the difference is not greater than one eighth of the total number of the characters of the item.

According to a preferred solution of the present invention, in Step D3, a method to determine whether the textual information of the business card submitted by the user A matches the business card information stored by the registered user is as follows. If the number of items of information being completely consistent is greater than half the total number of the items of information, or if at least one item of information is completely consistent and all corresponding information is different in only a few of characters, it is regarded that the textual information of the business card submitted by the user A matches the business card information stored by the registered user; otherwise, it is regarded that the textual information of the business card submitted by the user A does not match the business card information stored by the registered user.

According to a preferred solution of the present invention, in Step E, the contact information server returns the multimedia information stored by the business card owner being the user B on the website and associated with the business card to the user A. A method to return the multimedia information may be that the user A downloads the multimedia information completely, so that the information can be browsed without network connection; or may be that the user A only keeps a network link of the multimedia information, so that the information can only be browsed through network connection.

A method for obtaining information provided by contacts via network after inputting contact information includes the following steps.
Step 101: A user A obtains a business card of a user B.
Step 102: The user A inputs information in the business card of the user B into an address book.
Step 103: The user A, according to textual information in the business card of the user B, sends a inquery request to a server of a website siteC maintaining contact person information.
Step 104: The server of the website siteC maintaining the contact person information determines, according to the textual information of the business card submitted by the user A, whether multimedia information, stored by a business card owner being the user B, on the website and associated with the business card can be found; if yes, proceed to Step 105; otherwise, proceed to Step 106.
Step 105: The server of the website siteC returns the multimedia information stored by the business card owner being the user B on the website and associated with the business card to the user A.
Step 106: The server of the website siteC returns that no information associated with the business card can be provided.
Step 107: End.

According to a preferred solution of the present invention, in Step 102, the user A may input the information in the business card of the user B into the address book through one of the following methods.

In a first method, the user A directly manually inputs the information on the business card of the user B.

In a second method, the user A obtains an image of the business card of the user B by photographing, and then uses business card recognition software to automatically recognize and extract information in the image of the business card of the user B.

According to a preferred solution of the present invention, in Step 104, the server of the website siteC maintaining the contact person information determines, according to the textual information of the business card submitted by the user A, whether the multimedia information stored by the business card owner being the user B on the website and associated with the business card can be found; the server of the website siteC is required to determine whether the business card owner being the user B is a registered user of the website site C, whether the business card owner being the user B stores the information associated with the business card, and whether the business card owner being the user B allows the user A, submitting the request, to obtain the information.

According to a preferred solution of the present invention, the method for the server of the website siteC to perform inquery regarding the user B specifically includes the following steps.
Step 201: Obtain information of a business card stored by a registered user of the website.
Step 202: Match a name, a phone number, a mobile phone number, a fax number and E-mail information included in the textual information of the business card submitted by the user A with corresponding information in the business card information item by item, so as to obtain that some items of information are completely consistent, and some items of information are different in only a few of characters.
Step 203: Determine whether the textual information of the business card submitted by the user A matches the business card information stored by the registered user; if yes, proceed to Step 204; otherwise, proceed to Step 207.
Step 204: Determine whether the user storing the business card stores multimedia information associated with the business card; if yes, proceed to Step 205; otherwise, proceed to Step 208.
Step 205: Determine whether the user storing the business card allows the user A, submitting the request, to obtain the information; if yes, proceed to Step 206; otherwise, proceed to Step 208.
Step 206: Return the found multimedia information stored by the business card owner on the website and associated with the business card, proceed to Step 209, and end.
Step 207: Determine whether business card information stored by all registered users of the website is checked; if yes, proceed to Step 208; otherwise, proceed to Step 201 to obtain and match business card information stored by a next registered user of the website.
Step 208: Return inquery failure, proceed to 209, and end.
Step 209: End.

According to a preferred solution of the present invention, in Step 202, the being different in only a few of characters refers to that the number of characters that incur the difference is not greater than one eighth of the total number of the characters of the item. In Step 203, a method to determine whether the textual information of the business card submitted by the user A matches the business card information stored by the registered user is as follows. If the number of items of information being completely consistent is greater than half the total number of the items of information, or if at least one item of information is completely consistent and all corresponding information is different in only a few of characters, it is regarded that the textual information of the business card submitted by the user A matches the business card information stored by the registered user; otherwise, it is regarded that the textual information of the business card submitted by the user A does not match the business card information stored by the registered user.

According to a preferred solution of the present invention, in Step 105, the server of the website siteC returns the multimedia information stored by the business card owner being the user B on the website and associated with the business card to the user A. A method to return the multimedia information may be that the user A downloads the multimedia information completely, so that the information can be browsed without network connection; or may be that the user A only keeps a network link of the multimedia information, so that the information can only be browsed through network connection.

A method for obtaining information provided by contacts via network after inputting contact information includes the following steps.
Step A: A user A obtains contact information of a user B.
Step B: The user A inputs the contact information of the user B into an address book.
Step C: The user A sends a inquery request to a contact information server according to the contact information of the user B.
Step D': According to the contact information submitted by user A, the contact information server searches the information stored in the server to find out whether there is some information from user B related to the contact information; if yes, return relevant information to the user A; otherwise, inform the user A that no relevant information exists.

Implementation of the present invention requires a website having a contact person information maintaining function. A registered user of the website may store business card information thereof, which includes an image and textual information of the business card, on the website. The registered user of the website may further store various multimedia information including text, a picture, a video, and an audio, which is associated with the stored business card information thereof. The registered user of the website may set rights of the multimedia information, and stipulate that only specified users can obtain or browse the information or all users can obtain or browse the information. The business card owner is a registered user of the website. A user inputting the business card may be a registered user of the website, or may not be a registered user of the website.

Beneficial effects of the present invention are as follows. The present invention provides the method for obtaining information provided by contacts via network after inputting contact information, so that a user receiving a business card, after inputting business card information, can connect a specific website to obtain multimedia information pre-stored by a business card owner on the website and associated with the business card. The method eliminates the limit that a business card can only transfer information through a limited quantity of text and through limited size of a picture, so as to increase the quantity of information borne and transferred by the business card and add a manifestation of information.

### Brief Description of the Drawings

Fig. 1 is a flow chart of a method according to the present invention.
Fig. 2 is a flow chart of Step 104 of a method according to the present invention.

### Detailed Description of the Preferred Embodiments

Preferred embodiments of the present invention are described below in detail with reference to the accompanying drawings.

### Embodiment 1

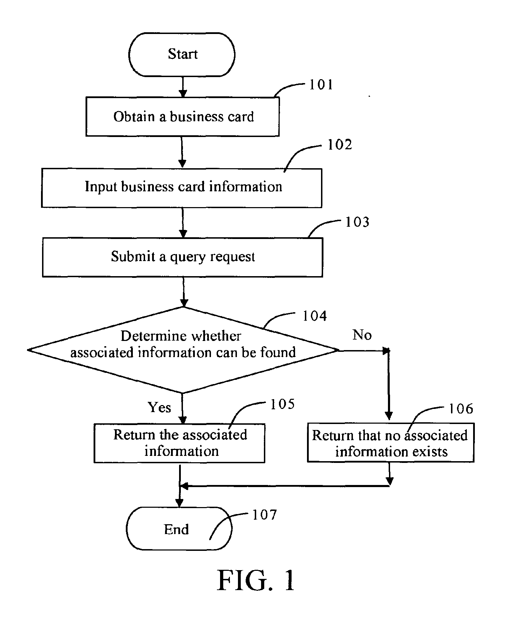

Referring to Fig. 1, the present invention provides a method for obtaining information provided by contacts via network after inputting contact information. The method includes the following steps.
Step 101: A user A obtains a business card of a user B.

The user A may obtain the business card of the user B through many methods, such as business card exchange performed during a business meeting or a gathering of friends, and handing around of a business card during product promotion.
Step 102: The user A inputs information in the business card of the user B into an address book.

The user A may input the information in the business card of the user B into the address book through the following methods.

In a first method, the user A directly manually inputs the information on the business card of the user B.

In a second method, the user A obtains an image of the business card of the user B by photographing, and then uses business card recognition software to automatically recognize and extract information in the image of the business card of the user B.
Step 103: The user A, according to textual information in the business card of the user B, sends a inquery request to a server of a website siteC maintaining contact person information. The website siteC has a contact person information maintaining function. A registered user of the website may store business card information thereof, which includes the image and the textual information of the business card, on the website. The registered user of the website may further store various multimedia information including text, a picture, a video, and an audio, which is associated with the stored business card information thereof.
Step 104: The server of the website siteC maintaining the contact person information determines, according to the textual information of the business card submitted by the user A, whether multimedia information, stored by a business card owner being the user B, on the website and associated with the business card can be found; if yes, proceed to Step 105; otherwise, proceed to Step 106.

In Step 104, the server of the website siteC maintaining the contact person information determines, according to the textual information of the business card submitted by the user A, whether the multimedia information stored by the business card owner being the user B on the website and associated with the business card can be found; the server of the website siteC is required to determine whether the business card owner being the user B is a registered user of the website site C, whether the business card owner being the user B stores the information associated with the business card, and whether the business card owner being the user B allows the user A, submitting the request, to obtain the information.

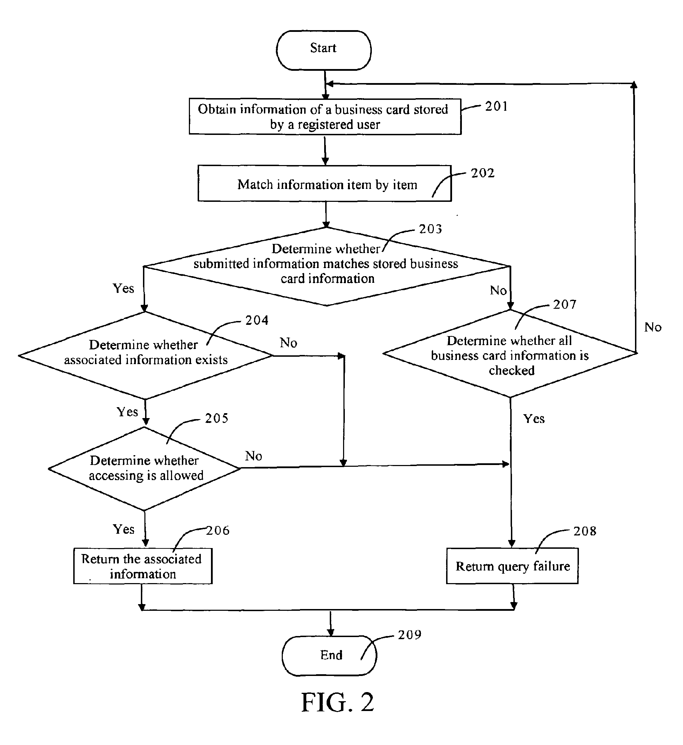

Referring to Fig. 2, Fig. 2 illustrates an implementation method of Step 104, which specifically includes the following steps.
Step 201: Obtain information of a business card stored by a registered user of the website.
Step 202: Match information such as a name, a phone number, a mobile phone number, a fax number and an E-mail address included in the textual information of the business card submitted by the user A with corresponding information in the business card information item by item, so as to obtain that some items of information are completely consistent, and some items of information are different in only a few of characters. The being different in only a few of characters refers to that the number of characters that incur the difference is not greater than one eighth of the total number of the characters of the item.
Step 203: Determine whether the textual information of the business card submitted by the user A matches the business card information stored by the registered user; if yes, proceed to Step 204; otherwise, proceed to Step 207. A method to determine whether the textual information of the business card submitted by the user A matches the business card information stored by the registered user is as follows. If the number of items of information being completely consistent is greater than half the total number of the items of information, or if at least one item of information is completely consistent and all corresponding information is different in only a few of characters, it is regarded that the textual information of the business card submitted by the user A matches the business card information stored by the registered user; otherwise, it is regarded that the textual information of the business card submitted by the user A does not match the business card information stored by the registered user.
Step 204: Determine whether the user storing the business card stores multimedia information associated with the business card; if yes, proceed to Step 205; otherwise, proceed to Step 208.
Step 205: Determine whether the user storing the business card allows the user A, submitting the request, to obtain the information; if yes, proceed to Step 206; otherwise, proceed to Step 208.
Step 206: Return the found multimedia information stored by the business card owner on the website and associated with the business card, proceed to Step 209, and end.
Step 207: Determine whether business card information stored by all registered users of the website is checked; if yes, proceed to Step 208; otherwise, proceed to Step 201 to obtain and match business card information stored by a next registered user of the website.
Step 208: Return inquery failure, proceed to 209, and end.
Step 209: End.
Step 105: The server of the website siteC returns the multimedia information stored by the business card owner being the user B on the website and associated with the business card to the user A.

In Step 105, the server of the website siteC returns the multimedia information stored by the business card owner being the user B on the website and associated with the business card to the user A. A method to return the multimedia information may be that the user A downloads the multimedia information completely, so that the information can be browsed without network connection; or may be that the user A only keeps a network link of the multimedia information, so that the information can only be browsed through network connection.
Step 106: The server of the website siteC returns information indicating that no information associated with the business card can be provided.
Step 107: End.

In view of the above, the present invention provides the method for obtaining information provided by contacts via network after inputting contact information, so that a user receiving a business card, after inputting business card information, can connect a specific website to obtain multimedia information pre-stored by a business card owner on the website and associated with the business card. The method eliminates the limit that a business card can only transfer information through a limited quantity of text and through limited size of a picture, so as to increase the quantity of information borne and transferred by the business card and add a manifestation of information.

### Embodiment 2

The embodiment provides a method for obtaining information provided by contacts via network after inputting contact information. The method includes the following steps.
Step A: A user A obtains contact information of a user B.
Step B: The user A inputs the contact information of the user B into an address book.
Step C: The user A sends a inquery request to a contact information server according to the contact information of the user B.
Step D: According to the contact information submitted by user A, the contact information server searches the information stored in the server to find out whether there is some information from user B related to the contact information; if yes, proceed to Step E; otherwise, proceed to Step F.
Step E: The contact information server returns the information stored by the user B on the website and associated with the contact information to the user A.
Step F: The contact information server returns that no information associated with the contact information can be provided.
Step G: End.

In Step B, the user A inputs the contact information of the user B into the address book through one of the following methods.

In a first method, the user A directly manually inputs the contact information of the user B.

In a second method, the user A obtains an image including the contact information of the user B by photographing or scanning, and uses character recognition software to automatically recognize and extract information in the image.

In Step D, the contact information server determines, according to the contact information submitted by the user A, whether the multimedia information stored by the user B on the server and associated with the contact information can be found. The contact information server is required to determine whether the user B is a registered user of the contact information server, whether the user B stores the information associated with the business card, and whether the user B allows other users, submitting a request, to obtain the information.

In the embodiment, the method for the contact information server to perform inquery regarding the user B includes the following steps.
Step D1: Obtain information of a business card stored by a registered user of the contact information server.
Step D2: Match a name, a phone number, a mobile phone number, a fax number and E-mail information included in the textual information of the business card submitted by the user A with corresponding information in the business card information item by item, so as to obtain the number of items of information that is completely consistent, and the number of items of information that is different in only a few of characters.
Step D3: Determine whether the textual information of the business card submitted by the user A matches the business card information stored by the registered user; if yes, proceed to Step D4; otherwise, proceed to Step D7.
Step D4: Determine whether the user storing the business card stores multimedia information associated with the business card; if yes, proceed to Step D5; otherwise, proceed to Step D8.
Step D5: Determine whether the user storing the business card allows the user A, submitting the request, to obtain the information; if yes, proceed to Step D6; otherwise, proceed to Step D8.
Step D6: Return the found multimedia information stored by the business card owner on the website and associated with the business card, proceed to Step D9, and end.
Step D7: Determine whether business card information stored by all registered users of the website is checked; if yes, proceed to Step D8; otherwise, proceed to Step D1 to obtain and match business card information stored by a next registered user of the website.
Step D8: Return inquery failure, proceed to D9, and end.
Step D9: End.

In Step D2, the being different in only a few of characters refers to that the number of characters that incur the difference is not greater than one eighth of the total number of the characters of the item.

In Step D3, a method to determine whether the textual information of the business card submitted by the user A matches the business card information stored by the registered user is as follows. If the number of items of information being completely consistent is greater than half the total number of the items of information, or if at least one item of information is completely consistent and all corresponding information is different in only a few of characters, it is regarded that the textual information of the business card submitted by the user A matches the business card information stored by the registered user; otherwise, it is regarded that the textual information of the business card submitted by the user A does not match the business card information stored by the registered user.

In Step E, the contact information server returns the multimedia information stored by the business card owner being the user B on the website and associated with the business card to the user A. A method to return the multimedia information may be that the user A downloads the multimedia information completely, so that the information can be browsed without network connection; or may be that the user A only keeps a network link of the multimedia information, so that the information can only be browsed through network connection.

The description and application of the present invention here are merely for exemplary purpose, and are not intended to limit the scope of the present to the above embodiments. The variations and modifications of the embodiments disclosed herein are possible, and for persons with ordinary skill in the art, the replacement and various equivalent parts in the present invention are publicly known. It should be noted for persons skilled in the art that, the present invention may be implemented through other forms, structures, arrangements, proportions and other components, materials and parts without departing from the scope of the present claims 2.

## Claims

1. A method for obtaining multimedia information related to contact information provided by contacts via a social networking site after inputting the contact information, comprising:
Step A: a user A obtaining (101) the contact information of a user B;
Step B: the user A inputting (102) the contact information of the user B into an address book;
Step C: the user A sending (103) a inquery request to a contact information server according to the contact information of the user B;
Step D: according to the contact information submitted by user A, the contact information server matching (202) said contact information with contact information of registered users of the social networking site stored in the server to find out whether there is some multimedia information from user B related to the contact information; if yes,
proceeding to Step E; otherwise, proceeding to Step F;
Step E: the contact information server returning (105) the multimedia information stored by the user B on the social networking site and associated with the contact information to the user A;
Step F: the contact information server returning (106) that no multimedia information associated with the contact information is able to be provided; and
Step G: ending (107).

2. The method according to claim 1, wherein in Step B, the user A inputs the contact information of the user B into the address book through one of the following methods:
in a first method, the user A directly manually inputs the contact information of the user B; and
in a second method, the user A obtains an image comprising the contact information of the user B by photographing or scanning, and uses character recognition software to automatically recognize and extract information in the image.

3. The method according to any one of previous claims, wherein in Step D, the contact information server determines, according to the contact information submitted by the user A, whether multimedia information stored by the user B on the server and associated with the contact information is able to be found; and the contact information is required to determine whether the user B is a registered user of the contact information server, whether the user B stores the information associated with a business card, and whether the user B allows other users, who have submitted a request, to obtain the information.

4. The method according to claim 3, wherein the contact information server matching the contact information input by user A with contact information of registered users of the social networking site stored in said server further comprising:
Step D1: obtaining contact information (201) of a registered user from the contact information server;
Step D2: matching (202) a name, a phone number, a mobile phone number, a fax number and E-mail information comprised in the contact information submitted by the user A with corresponding information of the registered user of step D1 item by item, so as to obtain the number of items of information that is completely consistent, and the number of items of information that is different in only a few of characters;
Step D3: determining (203) whether the contact information submitted by the user A matches the contact information stored by the registered user; if yes, proceeding to Step D4; otherwise, proceeding to Step D7;
Step D4: determining (204) whether the registered user multimedia information associated with the contact information; if yes, proceeding to Step D5; otherwise, proceeding to Step D8;
Step D5: determining (205) whether the registered user allows the user A, submitting the request, to obtain the contact information; if yes, proceeding to Step D6; otherwise, proceeding to Step D8;
Step D6: returning (206) the found multimedia information stored by the registered user on the social networking site and associated with the contact information, proceeding to Step D9, and ending;
Step D7: determining (207) whether contact information stored by all registered users of the social networking site is checked; if yes, proceeding to Step D8; otherwise, proceeding to Step D1 to obtain and match contact information stored by a next registered user of the social networking site;
Step D8: returning (208) inquery failure, proceeding to D9, and ending.
Step D9: ending (209).

5. The method according to claim 4, wherein in Step D2, the being different in only a few of characters refers to that the number of characters that incur the difference is not greater than one eighth of the total number of the characters of the item.

6. The method according to claim 4, wherein in Step D3, a method to determine whether the contact information submitted by the user A matches the contact information stored by the registered user is:
if the number of items of information being completely consistent is greater than half the total number of the items of information, or if at least one item of information is completely consistent and all corresponding information is different in only a few of characters, regarding that the contact information submitted by the user A matches the contact information stored by the registered user; otherwise, regarding that the contact information submitted by the user A does not match the contact information stored by the registered user.

7. The method according to any one of the previous claims, wherein the contact information server returns the multimedia information stored by the business card owner being the user B on the social networking site and associated with the contact information to the user A; and a method to return the multimedia information is that the user A downloads the multimedia information completely, so that the information is able to be browsed without network connection; or is that the user A only keeps a network link of the multimedia information, so that the information is only able to be browsed through network connection.

8. The method according to any one of the previous claims, wherein the contact information is provided in a business card.

## Patentansprüche

1. Verfahren zum Erhalten von Multimedia-Information, die mit Kontaktinformation in Beziehung steht, wobei die Multimedia-Information durch Kontakte über eine soziale Netzwerkseite nach Eingabe der Kontaktinformation bereitgestellt wird, mit:
Schritt A: ein Anwender A erhält (101) die Kontaktinformation eines Anwenders B;
Schrift B: der Anwender A gibt (102) die Kontaktinformation des Anwenders B in ein Adressbuch ein;
Schritt C: der Anwender A sendet (103) eine Abfrageanforderung zu einem Kontaktinformations-Dienstleister entsprechend der Kontaktinformation des Anwenders B;
Schritt D: entsprechend der von Anwender A eingereichten Kontaktinformation vergleicht (202) der Kontaktinformations-Dienstleister die Kontaktinformation mit Kontaktinformationen registrierter Anwender der sozialen Netzwerkseite, die in dem Dienstleister gespeichert sind, um herauszufinden, ob es eine gewisse Multimedia-Information von Anwender B gibt, die mit der Kontaktinformation in Beziehung steht; wenn ja, Weitergehen zum Schritt E; ansonsten Weitergehen zum Schritt F;
Schritt E: der Kontaktinformations-Dienstleister gibt (105) die von dem Anwender B auf der sozialen Netzwerkseite gespeicherte und der Kontaktinformation zugeordnete Multimedia-Information an den Anwender A zurück;
Schritt F: der Kontaktinformations-Dienstleister gibt (106) zurück, dass keine der Kontaktinformation zugeordnete Multimedia-Information bereitgestellt werden kann; und
Schritt G: Beenden (107).

2. Verfahren nach Anspruch 1, wobei im Schritt B der Anwender A die Kontaktinformation des Anwenders B durch eine der folgenden Verfahren in das Adressbuch eingibt:
in einem ersten Verfahren gibt der Anwender A die Kontaktinformation des Anwenders B direkt manuell ein; und
in einem zweiten Verfahren erhält der Anwender A ein Bild mit der Kontaktinformation des Anwenders B durch Fotografieren oder Scannen, und verwendet eine Zeichenerkennungssoftware, um automatisch Information in dem Bild zu erkennen und zu extrahieren.

3. Verfahren nach einem der vorhergehenden Ansprüche, wobei im Schritt D der Kontaktinformations-Dienstleister gemäß der von dem Anwender A eingereichten Kontaktinformation ermittelt, ob von dem Anwender B auf dem Dienstleister gespeicherte Multimedia-Information, die der Kontaktinformation zugeordnet ist, gefunden werden kann; und wobei die Kontaktinformation angeben muss, ob der Anwender B ein registrierter Anwender des Kontaktinformations-Dienstleisters ist, ob der Anwender B die mit einer Geschäftskarte im Zusammenhang stehende Information speichert und ob der Anwender B es anderen Anwendern, die eine Anforderung abgesetzt haben, erlaubt, die Information zu erhalten.

4. Verfahren nach Anspruch 3, wobei das Vergleichen durch den Kontaktinformations-Dienstleister der von Anwender A eingegebenen Kontaktinformation mit Kontaktinformation registrierter Anwender der sozialen Netzwerkseite, die in dem Dienstleister gespeichert sind, ferner umfasst:
Schritt D1: Erhalten von Kontaktinformation (201) registrierter Anwender aus dem Kontaktinformations-Dienstleister;
Schritt D2: Vergleichen (202) eines Namens, einer Telefonnummer, einer Mobiltelefonnummer, eine Faxnummer und einer E-Mail-Information, die in der von dem Anwender A eingereichten Kontaktinformation enthalten sind, mit entsprechender Information des registrierten Anwenders aus Schritt D1 Eintrag für Eintrag, um die Anzahl an Informationseinträgen zu ermitteln, die vollständig konsistent sind, und um die Anzahl an Informationseinträgen zu ermitteln, die sich nur durch einige Zeichen unterscheiden;
Schritt D3: Ermitteln (203), ob die von dem Anwender A eingereichte Kontaktinformation mit der von dem registrierten Anwender gespeicherten Kontaktinformation übereinstimmt; wenn ja, Weitergehen zum Schritt D4; ansonsten Weitergehen zum Schritt D7;
Schritt D4: Ermitteln (204), ob Multimedia-Information des registrierten Anwenders der Kontaktinformation zugeordnet ist; wenn ja, Weitergehen zum Schritt D5; ansonsten Weitergehen zum Schritt D8;
Schritt D5: Ermitteln (205), ob der registrierte Anwender es dem Anwender A, der die Anforderung absetzt, erlaubt, die Kontaktinformation zu erhalten; wenn ja, Weitergehen zum Schritt D6; ansonsten Weitergehen zum Schritt D8;
Schritt D6: Zurückgeben (206) der ermittelten Multimedia-Information, die von dem registrierten Anwender auf der sozialen Netzwerkseite gespeichert und der Kontaktinformation zugeordnet ist, Weitergehen zum Schritt D9 und Beenden;
Schritt D7: Ermitteln (207), ob von allen registrierten Anwendern der sozialen Netzwerkseite gespeicherte Kontaktinformation geprüft ist; wenn ja, Weitergehen zum Schritt D8; ansonsten Weitergehen zum Schritt D1, um Kontaktinformation, die von einem nächsten registrierten Anwender der sozialen Netzwerkseite gespeichert ist, zu erhalten und zu vergleichen;
Schritt D8: Zurückgeben (208) eines Abfragefehlers, Weitergehen zum Schritt D9 und Beenden.
Schritt D9: Beenden (209).

5. Verfahren nach Anspruch 4, wobei im Schritt D2 das sich Unterscheiden in nur einigen Zeichen sich darauf bezieht, dass die Anzahl an Zeichen, die die Unterscheidung hervorrufen, nicht größer als ein Achtel der Gesamtzahl der Zeichen des Informationseintrags ist.

6. Verfahren nach Anspruch 4, wobei im Schritt D3 ein Verfahren zum Ermitteln, ob die von dem Anwender A eingereichte Kontaktinformation mit der von dem registrierten Anwender gespeicherten Kontaktinformation übereinstimmt, wie folgt ist:
wenn die Anzahl an Informationseinträgen, die vollständig konsistent sind, größer als die Hälfte der Gesamtzahl der Informationseinträge ist, oder wenn mindestens ein Informationseintrag vollständig konsistent ist und die gesamte entsprechende Information lediglich in einigen Zeichen unterschiedlich ist, Annehmen, dass die von dem Anwender A eingereichte Kontaktinformation mit der von dem registrierten Anwender gespeicherten Kontaktinformation übereinstimmt; ansonsten Annehmen, dass die von dem Anwender A eingereichte Kontaktinformation nicht mit der von dem registrierten Anwender gespeicherten Kontaktinformation übereinstimmt.

7. Verfahren nach einem der vorhergehenden Ansprüche, wobei der Kontaktinformations-Dienstleister die von dem Eigentümer der Geschäftskarte, der der Anwender B ist, auf der sozialen Netzwerkseite gespeicherte und der Kontaktinformation zugeordnete Multimedia-Information an den Anwender A zurückgibt; und wobei ein Verfahren zur Rückgabe der Multimedia-Information darin besteht, dass der Anwender A die Multimedia-Information vollständig herunterlädt, so dass die Information ohne Netzwerkverbindung durchsucht werden kann; oder darin besteht, dass der Anwender A nur eine Netzwerkverknüpfung der Multimedia-Information behält, so dass die Information nur mittels Netzwerkverbindung durchsucht werden kann.

8. Verfahren nach einem der vorhergehenden Ansprüche, wobei die Kontaktinformation auf einer Geschäftskarte bereitgestellt wird.

## Revendications

1. Procédé pour obtenir des informations multimédia relatives aux informations de contact fournies par des contacts par l'intermédiaire d'un site de réseau social après entrée des informations de contact, comprenant :
Étape A: un utilisateur A obtient (101) les informations de contact d'un utilisateur B ;
Étape B : l'utilisateur A entre (102) les informations de contact de l'utilisateur B dans un carnet d'adresses ;
Étape C : l'utilisateur A envoie (103) une demande de renseignements à un serveur d'informations de contact conformément aux informations de contact de l'utilisateur B ;
Étape D : conformément aux informations de contact transmises par l'utilisateur A, le serveur d'informations de contact fait correspondre (202) lesdites informations de contact aux informations de contact des utilisateurs inscrits du site de réseau social enregistrées dans le serveur afin de déterminer s'il y a certaines informations multimédia provenant de l'utilisateur B relatives aux informations de contact ; si oui, passer à l'Étape E ; sinon, passer à l'Étape F ;
Étape E : le serveur d'informations de contact retourne (105) les informations multimédia enregistrées par l'utilisateur B sur le site de réseau social et associées aux informations de contact à l'utilisateur A ;
Étape F : le serveur d'informations de contact retourne (106) qu'aucune information multimédia associée aux informations de contact ne peut être fournie ; et
Étape G : terminer (107).

2. Procédé selon la revendication 1, dans lequel dans l'Étape B, l'utilisateur A entre les informations de contact de l'utilisateur B dans le carnet d'adresses selon l'un des procédés suivants :
dans un premier procédé, l'utilisateur A entre directement manuellement les informations de contact de l'utilisateur B ; et
dans un second procédé, l'utilisateur A obtient une image comprenant les informations de contact de l'utilisateur B par photographie ou balayage, et utilise un logiciel de reconnaissance des caractères pour reconnaître et extraire automatiquement les informations dans l'image.

3. Procédé selon l'une quelconque des revendications précédentes, dans lequel dans l'Étape D, le serveur d'informations de contact détermine, conformément aux informations de contact transmises par l'utilisateur A, si les informations multimédia enregistrées par l'utilisateur B sur le serveur et associées aux informations de contact peuvent être trouvées ; et les informations de contact sont nécessaires pour déterminer si l'utilisateur B est un utilisateur inscrit du serveur d'informations de contact, si l'utilisateur B enregistre les informations associées à une carte de visite, et si l'utilisateur B autorise d'autres utilisateurs, qui ont transmis une demande, à obtenir les informations.

4. Procédé selon la revendication 3, dans lequel le serveur d'informations de contact fait correspondre l'entrée d'informations de contact par l'utilisateur A aux informations de contact des utilisateurs inscrits du site de réseau social enregistrées dans ledit serveur, comprenant en outre :
Étape D1 : obtenir les informations de contact (201) d'un utilisateur inscrit à partir du serveur d'informations de contact ;
Étape D2 : faire correspondre (202) un nom, un numéro de téléphone, un numéro de téléphone mobile, un numéro de télécopie et des informations de courrier électronique compris dans les informations de contact transmises par l'utilisateur A aux informations correspondantes de l'utilisateur inscrit de l'Étape D1 point par point, de manière à obtenir le nombre d'éléments d'information qui sont complètement constants, et le nombre d'éléments d'information qui sont différents uniquement dans quelques caractères ;
Étape D3 : déterminer (203) si les informations de contact transmises par l'utilisateur A correspondent aux informations de contact enregistrées par l'utilisateur inscrit ; si oui, passer à l'Étape D4 ; sinon, passer à l'Étape D7 ;
Étape D4 : déterminer (204) si les informations multimédia de l'utilisateur inscrit sont associées aux informations de contact ; si oui, passer à l'Étape D5 ; sinon, passer à l'Étape D8 ;
Étape D5 : déterminer (205) si l'utilisateur inscrit autorise l'utilisateur A, transmettant la demande, à obtenir les informations de contact ; si oui, passer à l'Étape D6 ; sinon, passer à l'Étape D8 ;
Étape D6 : retourner (206) les informations multimédia trouvées enregistrées par l'utilisateur inscrit sur le site de réseau social et associées aux informations de contact, passer à l'Étape D9, et terminer ;
Étape D7 : déterminer (207) si les informations de contact enregistrées par tous les utilisateurs inscrits du site de réseau social sont vérifiées ; si oui, passer à l'Étape D8 ; sinon, passer à l'Étape D1 pour obtenir et faire correspondre les informations de contact enregistrées par l'utilisateur inscrit suivant du site de réseau social ;
Étape D8 : retourner (208) l'échec de la demande de renseignements, passer à D9, et terminer.
Étape D9 : terminer (209).

5. Procédé selon la revendication 4, dans lequel dans l'Étape D2, le fait d'être différent uniquement dans quelques caractères fait référence au fait que le nombre de caractères qui subit la différence n'est pas supérieur à un huitième du nombre total des caractères de l'élément.

6. Procédé selon la revendication 4, dans lequel dans l'Étape D3, un procédé pour déterminer si les informations de contact transmises par l'utilisateur A correspondent aux informations de contact enregistrées par l'utilisateur inscrit, concerne :
si le nombre d'éléments d'information qui sont complètement constants est supérieur à la moitié du nombre total des éléments d'information, ou si au moins un élément d'information est complètement constant et que toutes les informations correspondantes sont différentes uniquement dans quelques caractères, le fait que les informations de contact transmises par l'utilisateur A correspondent aux informations de contact enregistrées par l'utilisateur inscrit ; sinon, concerne le fait que les informations de contact transmises par l'utilisateur A ne correspondent pas aux informations de contact enregistrées par l'utilisateur inscrit.

7. Procédé selon l'une quelconque des revendications précédentes, dans lequel le serveur d'informations de contact retourne les informations multimédia enregistrées par le propriétaire de la carte de visite qui est l'utilisateur B sur le site de réseau social et associées aux informations de contact à l'utilisateur A ; et un procédé pour retourner les informations multimédia consiste en ce que l'utilisateur A télécharge les informations multimédia complètement, de sorte que les informations peuvent être parcourues sans connexion réseau; ou consiste en ce que l'utilisateur A maintient uniquement une liaison réseau des informations multimédia, de sorte que les informations peuvent être parcourues uniquement par l'intermédiaire d'une liaison réseau.

8. Procédé selon l'une quelconque des revendications précédentes, dans lequel les informations de contact sont fournies sur une carte de visite.
